# EUROPEAN PATENT APPLICATION

(11) **EP 1 533 209 A1**
(43) Date of publication of application: **25.05.2005**
(21) Application number: 03733479.4
(22) Date of filing: 18.06.2003
(51) Int. Cl.: B62D 3/12

(54) **STEERING DEVICE AND METHOD OF PRODUCING RACK SHAFT**

(30) Priority: 03.07.2002 JP 2002194625
(71) Applicant: NSK Ltd.,, Shinagawa-ku, Tokyo 141-8560 (JP)
(72) Inventor: SOMEYA, Kenji, Maebashi-shi, Gunma 371-0853 (JP); SAEKI, Takeharu, Maebashi-shi, Gunma 371-0853 (JP)
(74) Representative: Baldwin, Mark
(86) International application number: PCT/JP2003/007710
(87) International publication number: WO 2004/005110

(57) **Abstract**

A rack shaft (110) is formed with a rolling face (110c) narrower than a face width of rack teeth (110a) on the opposite side with an axis line X of the rack shaft being interposed therebetween, and formed with a pair of oblique faces (110b) on both sides with the rolling face (110c) being interposed therebetween, there are further provided a cylindrical roller (123) rolling on the rolling face (110c) of the rack shaft (110) and a support device (120) pressing the cylindrical roller (123) toward the rack shaft (110), and hence the cylindrical roller (123) rolls on the rolling face (110c) when a steering force is transmitted to the rack shaft (110) from a pinion (103a), thereby making it possible to allow a movement of the rack shaft (110) in an axis-line direction with a smaller resisting force.

## Description

### Technical Field

The present invention relates generally to a steering apparatus, and more particularly to a rack-and-pinion type steering apparatus including a rack shaft and a pinion.

### Background Arts

Known as one type of the steering apparatus of a vehicle is a rack-and-pinion type steering apparatus for converting a rotary force and a quantity of rotation of the pinion into a stroke and thrust in an axis-line direction of the rack shaft by engaging the pinion with rack teeth of the rack shaft. Herein, a vehicle having a comparatively light weight of the vehicle takes in some cases a construction of incorporating the rack-and-pinion type steering apparatus into a so-called manual steering apparatus in which a steering assist force is not outputted. In such a case, as a steering control wheel must be driven only by steering of a driver, a stroke quantity per one pinion rotation (stroke ratio) is set small to reduce steering torque, while a steering quantity is set large. Further, in a rack holding mechanism for holding the rack, a holding portion for holding a rear face (on a side opposite to a rack tooth face) of the rack shaft is contrived to reduce the steering torque by improving a transmission efficiency such as by providing a rolling type rack guide for rotatably supporting by use of a roller, etc., and so on (Japanese Utility Model Application No.59-30773, Japanese Utility Model Application No.61-124471, etc.).

By contrast, a vehicle having a comparatively heavy weight of the vehicle is generally provided with a so-called power steering apparatus that outputs the steering assist force for reducing the steering force in many cases. In this type of power steering apparatus, even when adopting a rack-and-pinion mechanism, it may be sufficient that the torque transmitted to the rack shaft be small. Therefore, even if the transmission efficiency declines to some degree, this does not hinder the steering of the driver, and consequently there is an actual case in which the rack holding mechanism for holding the rack shaft involves using a slide type rack guide that is less expensive than a rolling type rack guide.

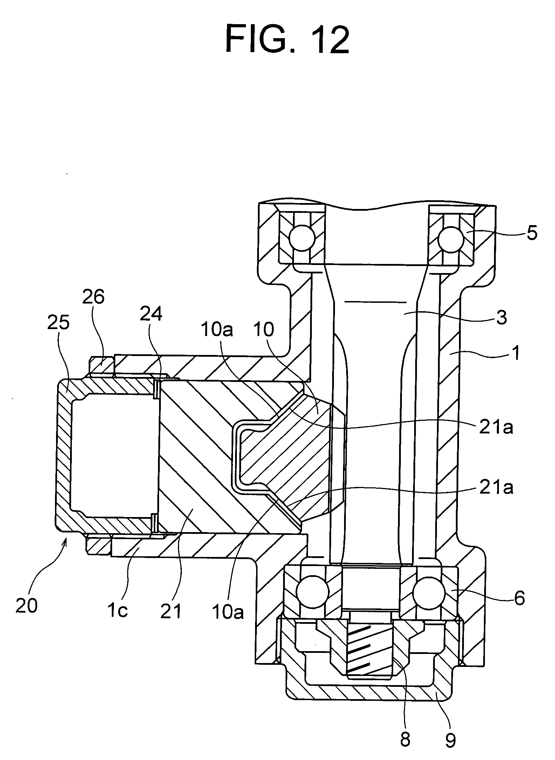

By the way, a so-called Y-shaped rack shaft is developed, wherein a section orthogonal to the axis line is worked in a Y type (Y-shape) by forging in order to improve tooth face accuracy of the rack teeth. FIG. 12 shows an example of applying this type of Y-shaped rack shaft to the steering apparatus. Referring to FIG. 12, an output shaft 3 extending within housing 1 is connected to an unillustrated steering shaft and is so supported by bearings 5, 6 as to be rotatable with respect to the housing 1. An inner race of the bearing 6 is fixed to a side end portion of the output shaft 3 by a nut 8, and an outer race of the bearing 6 is secured to the housing 1 by spiral-fitting of a fixing member 9 serving as a cover member.

The housing 1 is formed with a hollowed column portion 1c extending leftward in FIG. 12 from a periphery of a rack shaft 10 classified as the Y-shaped rack shaft. A support device 20 is disposed in the hollowed column portion 1c. The support device 20 is constructed of a main body 21 taking substantially a cylindrical shape, a circular-pipe-shaped screw member 25 for securing the main body 21 to the hollowed column portion 1c, a disc spring 24 disposed between the main body 21 and the screw member 25 and biasing the main body 21 toward the rack shaft 10 with respect to the screw member 25, and a lock member 26 of the screw member 25.

The main body 21 is recessed corresponding to an outer configuration of the rack shaft 10, and has, i.e., a pair of tapered faces 21a. The tapered faces 21a respectively abut on oblique faces 10a of the rack shaft 10.

Herein, when a great force is transmitted to between the output shaft 3 and the rack shaft 10, there occurs a separating force acting to separate the rack shaft 10 from the output shaft 3. In the present embodiment, the tapered faces 21a of the main body 21 of the support device 20 abut on the oblique faces 10a of the rack shaft 10, whereby this separating force can be properly supported.

Incidentally, the tapered faces 21a of the main body 21 of the support device 20 are brought into slide-contact with the oblique faces of the rack shaft 10 over their large surface areas, and hence frictional forces acting therebetween become comparatively large. Herein, if applying such a construction to the manual steering apparatus, when the driver rotates a steering wheel, a frictional force thereof appears as resistance, and consequently there arises a problem that the driver feels the steering force heavy. On the other hand, in the case of applying the construction shown in FIG. 12 to the power steering apparatus, there is no possibility in which the driver feels the steering force heavy owing to the steering assist force, however, power is consumed extra corresponding to the steering assist force resistible over the frictional force, and a problem is that the energy can not be saved.

### Disclosure of the Invention

It is an object of the present invention, which was devised in view of the problems inherent in the prior art, to provide a steering apparatus capable of properly supporting a Y-shaped rack shaft and a method of manufacturing the rack shaft.

To accomplish the above object, in a steering apparatus comprising a rack shaft connected to a traveling wheel steering apparatus and formed with rack teeth on its outer face, and a pinion connected to a steering wheel and meshing with the rack teeth, a steering apparatus according to a first invention is characterized in that the rack shaft is formed with a rolling face narrower than a face width of the rack teeth on a side opposite to the rack teeth with an axis line of the rack shaft being interposed therebetween, and with a pair of faces on both sides with the rolling face being interposed therebetween, and is characterized by further comprising a single rolling body rolling on the rolling face of the rack shaft and a support member pressing the rolling body toward the rack shaft.

A method of manufacturing a rack shaft for a steering apparatus according to a second invention comprises a step of forming two grooves extending along an outer face with a phase other than 180 degrees by effecting a forging work upon a material, a step of forming rack teeth on an outer face having a wider interval between the two grooves in a peripheral direction of the rack shaft, and a step of forming a rolling face, on which a rolling body rolls, on an outer face having a narrower interval between the two grooves in the peripheral direction of the rack shaft.

In the steering apparatus comprising the rack shaft connected to the traveling wheel steering apparatus and formed with the rack teeth on its outer face, and the pinion connected to the steering wheel and meshing with the rack teeth, the steering apparatus according to the first invention is constructed such that the rack shaft is formed with the rolling face narrower than the face width of the rack teeth on the side opposite to the rack teeth with the axis line of the rack shaft being interposed therebetween, and with the pair of faces on both sides with the rolling face being interposed therebetween, and further comprises the single rolling body rolling on the rolling face of the rack shaft and the support member pressing the rolling body toward the rack shaft. Therefore, when the steering force is transmitted to the rack shaft from the pinion, the rolling body rolls on the rolling face, thereby making it possible to allow the movement of the rack shaft with a smaller resisting force. Note that there is a so-called Y-shaped rack shaft in which the rolling face narrower than a face width of the rack teeth is formed on the opposite side with the axis line of the rack shaft being interposed therebetween, and a pair of faces (e.g., oblique faces) are formed on both sides with the rolling face being interposed therebetween.

Further, the support member includes an auxiliary support member abutting on a position, other than the rolling face, of the rack shaft, whereby the rack shaft can be held surely by restraining the rack shaft from rotating about the axis line.

By the way, there is a problem of how the rolling face on which the rolling body rolls is formed with high accuracy in terms of forming the rack shaft of the steering apparatus according to the first invention. According to the method of manufacturing the rack shaft of the second invention that follows, the rolling face can be formed with the high accuracy.

The method of manufacturing the rack shaft for the steering apparatus according to the second invention comprises the step of forming the two grooves extending along the outer face with the phase other than 180 degrees by effecting the forging work upon the material, the step of forming the rack teeth on the outer face having the wider interval between the two grooves in the peripheral direction of the rack shaft, and the step of forming the rolling face, on which the rolling body rolls, on the outer face having the narrower interval between the two grooves in the peripheral direction of the rack shaft. Therefore, for instance, on the basis of the rack shaft, or on the basis of the axis line of the rack shaft, the rolling face can be worked with the higher accuracy. It is to be noted that the three steps described above may be executed separately and are executed simultaneously as in the case of a forging work, whereby the work exhibiting the high accuracy can be conducted more easily.

Further, it is preferable that the rolling face is worked into a flat face.

Alternatively, it is preferable that the rolling face is worked into a curved face.

### Brief Description of the Drawings

FIG. 1 is a sectional view of a rack-and-pinion type steering apparatus according to a first embodiment;
FIG. 2 is a sectional view of the rack-and-pinion type steering apparatus according to a second embodiment;
FIG. 3 is a sectional view of the rack-and-pinion type steering apparatus according to a third embodiment;
FIG. 4 is a sectional view of the rack-and-pinion type steering apparatus according to a fourth embodiment;
FIG. 5 is an explanatory view showing a rack shaft manufacturing method;
FIG. 6 is an explanatory view showing the rack shaft manufacturing method;
FIG. 7 is an explanatory view showing the rack shaft manufacturing method;
FIG. 8 is an explanatory view showing the rack shaft manufacturing method;
FIG. 9 is an explanatory view showing the rack shaft manufacturing method;
FIG. 10 is an explanatory view showing the rack shaft manufacturing method;
FIG. 11 is an explanatory view showing the rack shaft manufacturing method; and
FIG. 12 is a sectional view of the rack-and-pinion type steering apparatus in a comparative example.

### Best Mode for Carrying out the Invention

Embodiments of the present invention will hereinafter be described with reference to the drawings.

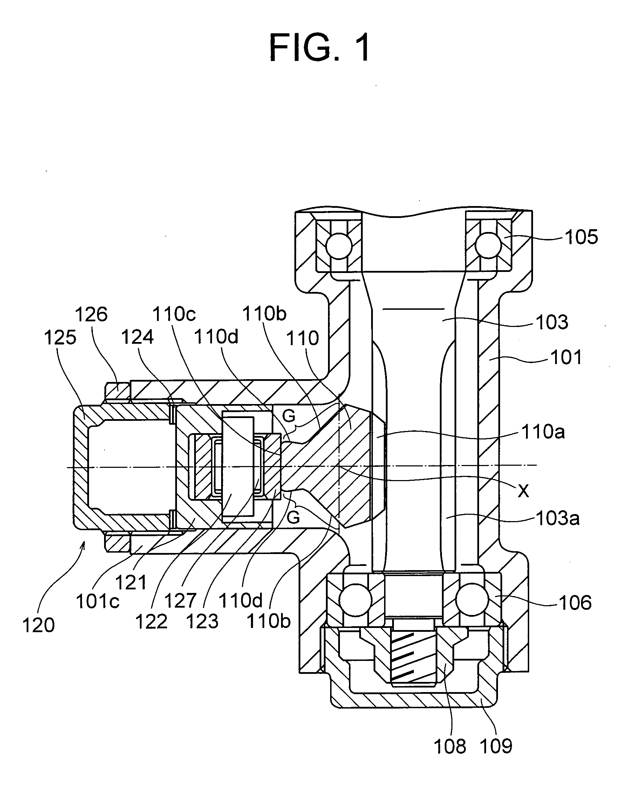

FIG. 1 is a sectional view of a rack-and-pinion type steering apparatus according to a first embodiment. Referring to FIG. 1, an output shaft 103 extending within housing 101 is connected to an unillustrated steering shaft, and is so supported by bearings 105, 106 as to be rotatable within the housing 101. An inner race of the bearing 106 is fixed to a side end portion of the output shaft 103 with a nut 108 screwed to the output shaft 103. An outer race of the bearing 106 is secured to the housing 101 by spiral-fitting of a fixing member 109 serving as a cover member. A pinion 103a of the output shaft 103 meshes with rack teeth 110a of the rack shaft 110 of which both side ends are connected to a tie rod of an unillustrated wheel steering apparatus.

The housing 101 is formed with a hollowed column portion 101c extending leftward in FIG. 1 from a periphery of the rack shaft 110. A support device 120 is disposed within the hollowed column portion 101c. The support device 120 is constructed of a cylindrical main body 121, a shaft 122 fitted inside a sac hole of the main body 121, a cylindrical roller 123 defined as a rolling member disposed along the periphery of the shaft 122, a needle bearing 127 for supporting the cylindrical roller 123 so as to be rotatable about the shaft 122, a screw member 125 for fitting the main body 121 to the hollowed column portion 101c, a disc spring 124 disposed between the screw member 125 and the main body 121 and biasing the main body 121 toward the rack shaft 110, and a lock member 126 of the screw member 125. A compression quantity of the disc spring 124 is changed by adjusting a screw-in quantity of the screw member 125, whereby a pressing force of the rack shaft 110 can be adjusted. After the adjustment, the screw member 125 is fixed by locking of the lock member 126, thereby making it possible to stop slackening of the screw member 125.

In the rack shaft 110, a groove G with its left upper and lower portions notched in section orthogonal to an axis line X shown in FIG. 1, is formed on the side opposite to the rack teeth 110a with the axis line X being interposed therebetween. The groove G is a triangular groove in which a horizontal face 110d intersects an oblique face 110b. This type of rack shaft is referred to as a Y-shaped rack shaft and is formed by a forging work in the first embodiment. A manufacturing method thereof will be explained later on. An outer face of a protruded portion interposed between the grooves G serves as a rolling face 110c. The rolling face 110c is a flat face parallel with the rack teeth 110a. In the first embodiment, the rolling face 110c remains it was subjected to the forging work.

An operation in the embodiment will be described. When a steering force is inputted to an unillustrated steering wheel, the steering force is transmitted to the output shaft 103 via an unillustrated steering shaft, and the rotary force of the output shaft 103 is converted into thrust acting in a longitudinal direction of the rack shaft 110 through the pinion 103a and the rack teeth 110a that mesh with each other. Then, the rack shaft 110 is moved in a vertical direction on the sheet surface by the thrust in the longitudinal direction, whereby unillustrated traveling wheels are steered. At this time, the cylindrical roller 123 rolls on the rolling face 110c and allows a movement of the rack shaft 110 with low friction.

According to the first embodiment, the Y-shaped rack shaft 110 is formed with a rolling face 110c narrower than a face width of the rack teeth 110a on the opposite side with the axis line X of the rack shaft being interposed therebetween and is further formed with a pair of oblique faces 110b on both sides (upper and lower sides) with the rolling face 110c being interposed therebetween. Moreover, there are provided the cylindrical roller 123 rolling on the rolling face 110c of the rack shaft 110 and the support device 120 pressing the cylindrical roller 123 toward the rack shaft 110, and hence, when the steering force is transmitted to the rack shaft 110 from the pinion 103a, the cylindrical roller 123 rolls on the rolling face 110c, thereby making it possible to allow the movement of the rack shaft 110 in the axis-line direction with a smaller resisting force.

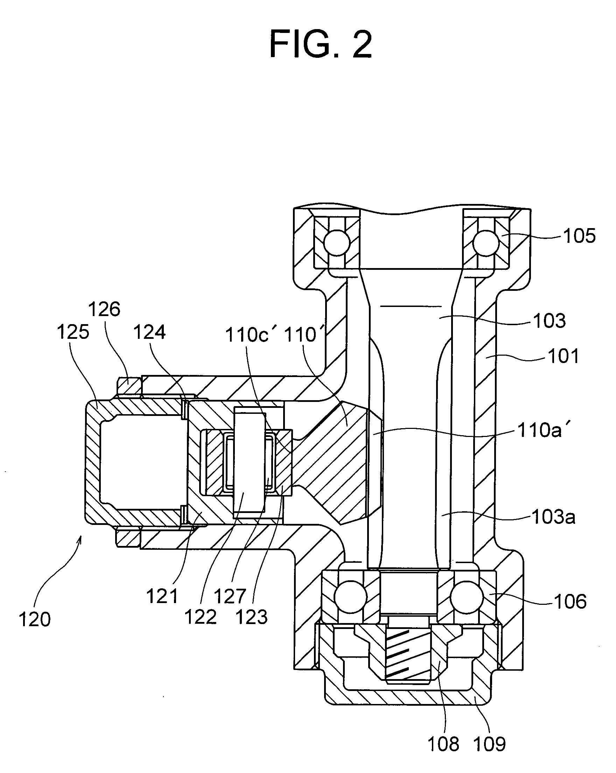

FIG. 2 is a sectional view of the rack-and-pinion type steering apparatus according to a second embodiment. A different point of the second embodiment in FIG. 2 from the first embodiment in FIG. 1 is that a rolling face 110c' of a rack shaft 110' is machined after the forging work so that the rolling face 110c' becomes a flat face parallel with the rack teeth 110a', whereby smooth rolling of the cylindrical roller 123 can be ensured. Other constructions are the same as those in the first embodiment 1, and therefore the components are marked with the same numerals and symbols, of which the descriptions are omitted.

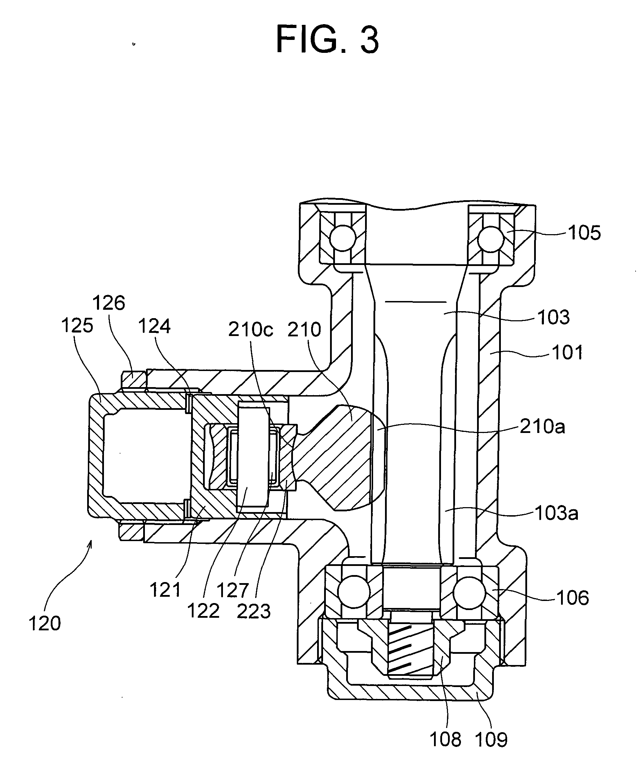

FIG. 3 is a sectional view of the rack-and-pinion type steering apparatus according to a third embodiment. A different point of the third embodiment in FIG. 3 from the first embodiment in FIG. 1 is that a rolling face 210c of a rack shaft 210 is machined after the forging work so that the rolling face 210c becomes a convex face as compared with the rack teeth 210a, and an outer peripheral surface of a cylindrical roller 223 becomes a concave face corresponding to the above convex face. According to the third embodiment, the cylindrical roller 223 has an effect in restraining displacements of the rack shaft 210 in upper-and-lower directions in FIG. 3. Other constructions are the same as those in the first embodiment 1, and therefore the components are marked with the same numerals and symbols, of which the descriptions are omitted.

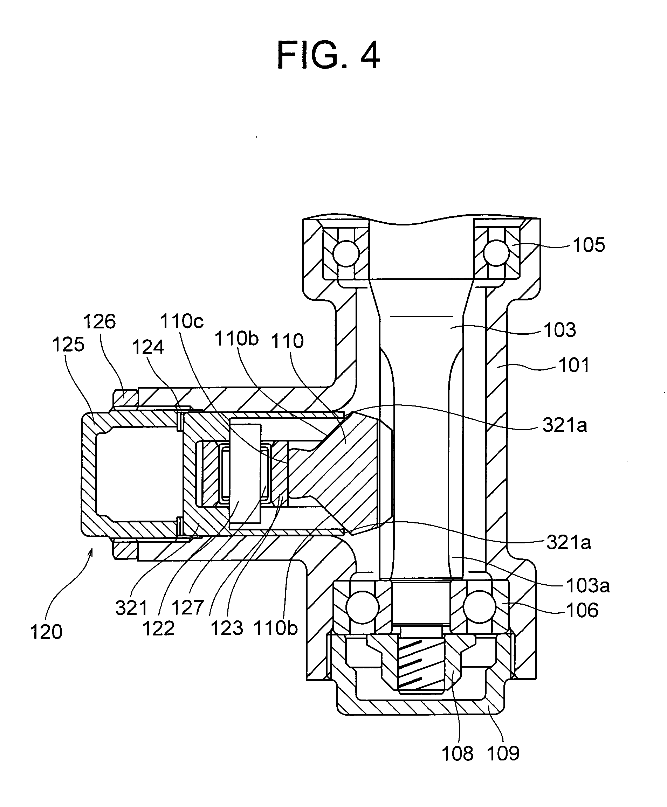

FIG. 4 is a sectional view of the rack-and-pinion type steering apparatus according to a fourth embodiment. A different point of the fourth embodiment in FIG. 4 from the first embodiment in FIG. 1 is, though the rack shaft 110 is common, a main body 321 of the support device 120. To be specific, the difference is that upper and lower edges 321a of a left side end of the main body 321 extend rightward in FIG. 4 and abut on the oblique faces 110b of the groove portion of the rack shaft 110. According to the fourth embodiment, an effect is that the cylindrical roller 123 restricts the displacements of the rack shaft 110 in right-and-left directions in FIG. 4, and the upper and lower edges 321a of the left side end of the main body 321 restrain the displacements of the rack shaft 110 in the upper-and-lower directions. Other constructions are the same as those in the first embodiment 1, and therefore the components are marked with the same numerals and symbols, of which the descriptions are omitted.

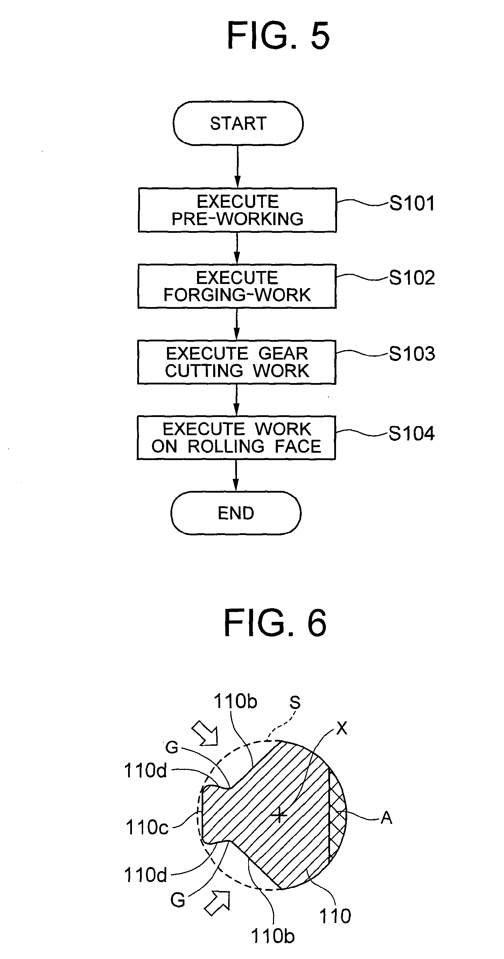

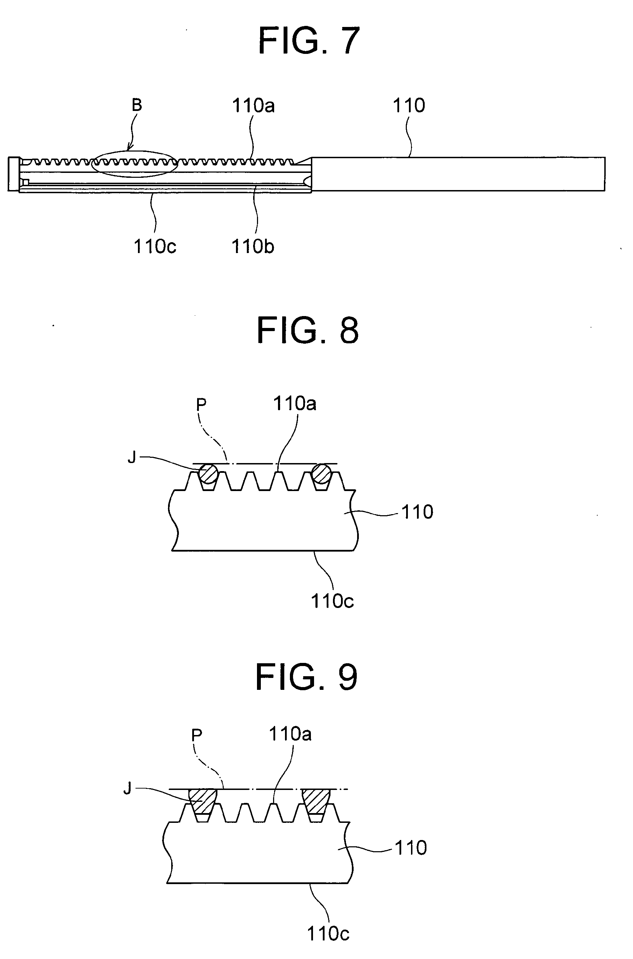

FIGS. 5 through 11 are explanatory views showing a rack shaft manufacturing method according to the present embodiment. FIG. 5 shows respective steps methodized as the rack shaft manufacturing method. Referring to FIG. 5, a step S101 involves pre-working that a material such as round shaft steel is cut out to a predetermined length, and the material of this type is subjected to the forging work in a step S102. Herein, a round shaft material S depicted by a dotted line in FIG. 6 is forged by a mold formed so as to protrude in at least two directions (intersecting each other at an angle other than 180 degrees) of directions orthogonal to the axis line X, whereby the groove G (shown by a solid line in FIG. 6) including the faces 110d, 110b can be formed extending substantially to a half of the entire length (see FIG. 7).

Subsequently, in a step S103, a gear cutting work of the rack teeth is conducted. More specifically, an area A (an outer face on the side having a wider interval between the two grooves G) depicted by double-hatching in FIG. 6 is subjected to a cutting work, thereby forming the rack teeth 110a. FIG. 7 shows the rack shaft 110 after the gear cutting work. Note that if the rolling face 110c positioned on the outer face on the side having a narrower interval between the two grooves G remains as it was subjected to the forging work, the rack shaft 110 is completed by executing a predetermined surface treatment. This type of rack shaft 110 is incorporated in the first and fourth embodiments illustrated in FIGS. 1 and 4.

By contrast, when higher accuracy is required of the rolling face, in a step S104 a finishing work is effected on the rolling face. Herein a problem arises as to what reference the finishing work of the rolling face is performed based on. In the rack shaft manufacturing method according to the present embodiment, the rolling face 110c is positioned on the outer face on the side opposite to the rack teeth 110a, and hence, when the finishing work of the rolling face 110c is conducted based on the reference of the rack teeth 110a of the rack shaft 110 that is formed with the high accuracy, the accuracy of the rolling face is improved to a preferable degree.

To describe it more specifically, in FIG. 8 showing in enlargement a portion B in FIG. 7 together with a jig J, two pieces of round bars of the jig J abut on the teeth faces of the rack teeth 110a, thereby establishing a reference plane P. Therefore, the rolling face 110c may be worked so as to be parallel with this reference plane P.

Further, according to a modified example, in FIG. 9 showing in enlargement the portion B in FIG. 7 together with the jig J, two pieces of wedge bars of the jig J abut on the teeth faces of the rack teeth 110a, thereby establishing the reference plane P. Therefore, the rolling face 110c may be worked so as to be parallel with this reference plane P.

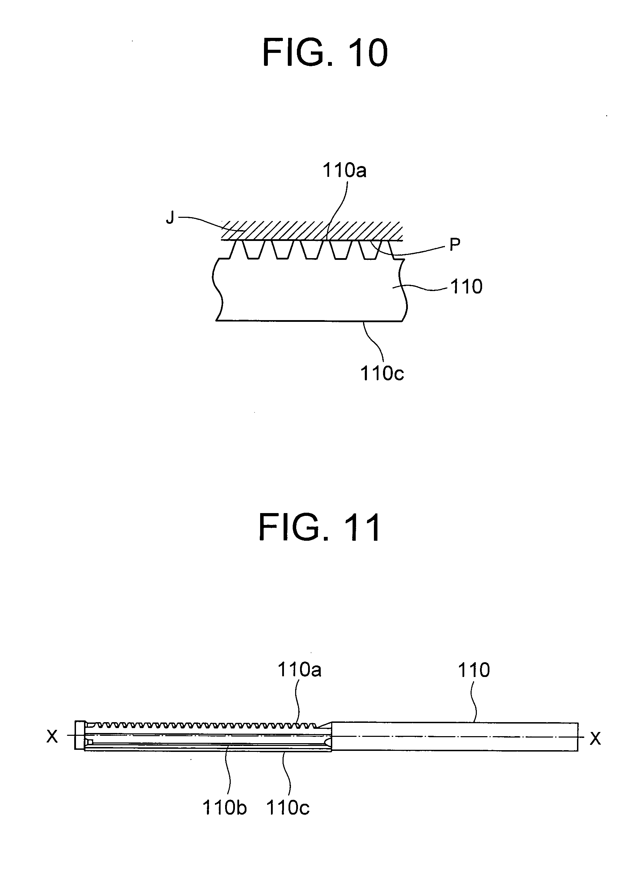

Further, according to another modified example, in FIG. 10 showing in enlargement the portion B in FIG. 7 together with the jig J, the reference plane P itself of the jig J abuts on the tooth tops of the rack teeth 110a, thereby establishing the reference plane P. Therefore, the rolling face 110c may be worked so as to be parallel with this reference plane P.

Note that the rack teeth 110a are created based on the reference of the axis line X of the rack shaft 110, and therefore it can be also considered by way of a different embodiment of the rack shaft manufacturing method that the rolling face 110c is worked so as to be parallel with this axis line X (see FIG. 11). The finishing work is performed with the high accuracy as described above, whereby the rack shaft formed with the rolling faces 110c', 210c is incorporated in the second and third embodiments in FIGS. 2 and 3.

The present invention has been discussed so far in detail by way of the embodiments, however, the present invention should not be construed in a way that is limited to the embodiments described above and can be, as a matter of course, properly changed and improved within the scope that does not distort the gist of the invention.

## Claims

1. A steering apparatus comprising a rack shaft connected to a traveling wheel steering apparatus and formed with rack teeth on its outer face, and a pinion connected to a steering wheel and meshing with said rack teeth, is
**characterized in that**,
said rack shaft is formed with a rolling face narrower than a face width of said rack teeth on a side opposite to said rack teeth with an axis line of said rack shaft being interposed therebetween, and with a pair of faces on both sides with said rolling face being interposed therebetween, and
**characterized by** further comprising a single rolling body rolling on said rolling face of said rack shaft and a support member pressing said rolling body toward said rack shaft.

2. A steering apparatus according to claim 1, wherein said support member includes an auxiliary support member abutting on a position, other than said rolling face, of said rack shaft.

3. A method of manufacturing a rack shaft for a steering apparatus, comprising:
a step of forming two grooves extending along an outer face with a phase other than 180 degrees by effecting a forging work upon a material;
a step of forming rack teeth on an outer face having a wider interval between said two grooves in a peripheral direction of said rack shaft; and
a step of forming a rolling face, on which a rolling body rolls, on an outer face having a narrower interval between said two grooves in the peripheral direction of said rack shaft.

4. A method of manufacturing a rack shaft according to claim 3, wherein said rolling face is worked into a flat face.

5. A method of manufacturing a rack shaft according to claim 3, wherein said rolling face is worked into a curved face.
